# NEUE EUROPÄISCHE PATENTSCHRIFT

(11) **EP 0 149 735 B2**
(45) Veröffentlichungstag und Bekanntmachung des Hinweises auf die Entscheidung über den Einspruch: **09.07.1997**
(45) Hinweis auf die Patenterteilung: 07.12.1988
(21) Anmeldenummer: 84112908.3
(22) Anmeldetag: 04.02.1982
(51) Int. Cl.: H04N 17/06, G11B 27/00, G11B 27/34, G07C 3/00

(54) **Videorecorder mit gespeicherten Service-Informationen**
Video recorder with stored service information
Appareil d'enregistrement vidéo à informations de service stockées

(30) Priorität: 11.02.1981 DE 3104843
(43) Veröffentlichungstag der Anmeldung: 31.07.1985
(62) Teilanmeldung aus: 82100797.8
(73) Patentinhaber: Thomson Consumer Electronics Sales GmbH, 30453 Hannover (DE)
(72) Erfinder: Scholz, Gerhard, D-3387 Vienenburg 2 (DE)
(74) Vertreter: Ahrens, Thomas, Dipl.-Phys.

(56) Entgegenhaltungen:
- DE-A- 2 715 527
- DE-A- 2 918 846
- DE-A- 2 929 532
- FR-A- 2 444 742
- JP-A- 153 432
- US-A- 4 062 061
- PROCEEDINGS OF THE CONFERENCE ON COMPUTER GRAPHICS, PATTERN RECOGNITIONN & DATA STRUCTURE, 14.-16. Mai 1975, Seiten 163-169, IEEE, Long Beach,, US; M.L. GRIFFITH et al.: "Interactive audio-graphics for speech and image characterization"
- Tagungsband der 8. Jahrestagung der FKTG vom 6. - 9.10.1980, Seiten 242-268
- SMPTE Journal 88 (1979), Heft 12, Seiten 831-834

## Beschreibung

Die Erfindung betrifft einen Videorecorder mit einem Speicher, in welchem Daten für Service-Informationen gespeichert sind.

Mit fortschreitender Technik wird auch der Service an handelsüblichen Videorecordern immer* umfangreicher und zeitintensiver. Oftmals müssen nach vorbestimmten Regeln mechanische und elektrische Einstellarbeiten gleichzeitig oder nacheinander ausgeführt werden. Die Hinweise für derartige Arbeiten sind zwar in den Service-Unterlagen enthalten, jedoch wegen der Vielzahl der erforderlichen Arbeiten sind die Anleitungen sehr umfangreich. Das nötige Wissen muss im allgemeinen durch häufiges Lesen dieser Anleitungen immer wieder neu erworben werden. In der Praxis ist es oftmals auch wichtig, die Betriebsstundenzahl oder den jeweiligen Änderungszustand, der z.B. der Geräte-Nummer des Recorders zugeordnet ist, zu wissen.

Es ist nach DE-OS 2918846 als Hilfe für die Programmierung von Videorecordern eine Anordnung bekannt, wonach auf dem Bildschirm eines angeschlossenen Fernsehgerätes zur Wahrung der Übersichtlichkeit eine Auflistung vorprogrammierter Aufnahmedaten unter Angabe der gewünschten Schaltfunktionen gegeben wird.

Durch den Tagungsband der 8. Jahrestagung der FKTG vom 6.-9. Oktober 1980, Seiten 242 - 268 ist es bekannt, bei Fernsehstudio-Anlagen die Fehlersuche mittels Mikrocomputern und eines nach dem sogenannten MOSAIC System entwickelten Softwarepakets zu erleichtern oder zu automatisieren.

Durch die Zeitschrift "SMPTE Journal", 88 (1979) 12 (Dezember), Seiten 831 - 834 ist es bekannt, in einem Videorekorder für Steuer- und Regelzwecke Mikrocomputer und Mikroprozessoren anzuwenden.

Es ist ferner aus der JP-OS 153432/1980 bekannt, die Programmierung eines Fernsehempfängers durch eine sogenannte Bedienerführung zu erleichtern, bei welcher die jeweils folgenden Bedienvorgänge als Anweisungen auf dem Bildschirm dargestellt werden.

Der Erfindung liegt die Aufgabe zugrunde, den Service für Videorecorder zu vereinfachen.

Diese Aufgabe wird durch die im Anspruch 1 beschriebene Erfindung gelöst. Vorteilhafte Weiterbildungen der Erfindung sind in den Unteransprüchen beschrieben.

Bei der Erfindung kann ein mit dem Videorecorder über bekannte Verbindungen sowohl in der Hochfrequenzebene als auch in der Video-Audio-Ebene angeschlossener handelsüblicher Fernsehempfänger dazu genutzt werden, nach Betätigen eines Service-Schalters in übersichtlicher und verständlicher Form die jeweils notwendigen Hinweise für den Service optisch oder akustisch zu übermitteln. So kann z.B. mit Hilfe einer Fortschalttaste zwischen den verschiedenen Serviceangaben ausgewählt werden. Der Bedienende erhält somit immer einen Leitfaden für den jeweils richtigen Service-Ablauf.

Die optisch oder akustisch dargestellten Informationen können unterschiedlicher Art sein. Sie können eine Aufforderung an den Bedienenden enthalten, etwas Bestimmtes zu tun. Sie können eine Bestätigung enthalten, dass eine durchgeführte Einstellung für den Recorder verständlich war und verwertet wurde. Sie können auch anzeigen, dass offensichtlich eine Fehleinstellung vorliegt.

Die Erfindung kann sich auf alle in der Praxis vorkommenden Arten von Servicefunktionen erstrecken. Dabei können die vom Videorecorder zum Wiedergabegerät übermittelten Signale erläuternden Steuersignale, einen Text, eine bestimmte Graphik, Tabellen, Bedienungssymbole sowie Sprache und sonstige Tonsignale in codierter und uncodierter Form enthalten.

Das Signal kann vom Videorecorder dem Wiedergabegerät, z.B. einem handelsüblichen Fernsehempfänger, als FBAS-Signal zur sogenannten AV-Buchse zugeführt werden. In diesem Fall wird zusätzlich ein NF-Signal zur Wiedergabe von Sprache und Ton übertragen. Dieses Signal kann in dem Videorecorder in einer Schaltung zur synthetischen Erzeugung von Sprachsignalen gewonnen werden, einem sogenannten Sprachsynthese-Modul. Das Signal kann auch mittels eines modulierten Trägers der Antennenbuchse eines Fernsehempfängers zugeführt werden.

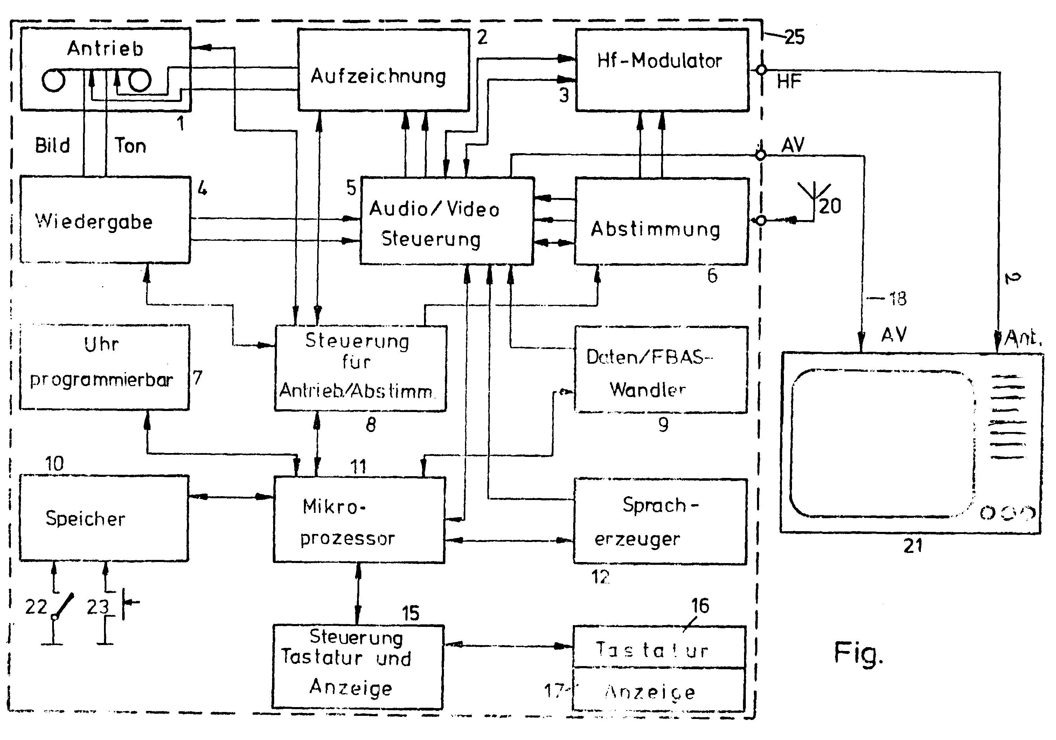

Ein Ausführungsbeispiel der Erfindung wird im folgenden anhand der Zeichnung erläutert. Die Figur zeigt ein Blockschaltbild eines Videorecorders, in dem die erfindungsgemässe Lösung im Prinzip verwirklicht ist.

In der Figur gelangt das von der Antenne 20 empfangene HF-Signal eines Fernsehsenders zur Abstimmeinheit 6. Von dort kann es direkt wieder auf einen Ausgang des Videorecorders 25 geschaltet werden und über die Leitung 19 zur Antennenbuchse des Fernsehempfängers 21 gelangen. In der Abstimmeinheit 6 wird das empfangene Signal in Bild- und Tonsignale decodiert und über die Steuereinheit 5 und die Aufzeichnungseinheit 2 mit der Antriebseinheit 1 auf dem Videoband aufgezeichnet. Diese Signale können zusätzlich über die Steuereinheit 5 zum AV-Ausgang des Videorecorders 25 und von dort über AV-Leitung 18 zum Fernsehempfänger 21 geführt werden. Diese Durchschaltung der empfangenen Signale zum Fernsehempfänger 21 kann auch ohne Aufzeichnung der Signale auf dem Videoband erfolgen.

Im Wiedergabebetrieb wird das Signal über die Wiedergabeeinheit 4 von der Antriebseinheit 1 über die Steuerungseinheit 5 zum AV-Ausgang und von dort über die AV-Leitung 18 dem Fernsehempfänger 21 zugeführt. Das Signal kann ebenso zum HF-Modulator 3 gelangen und von dort als modulierter Träger über die Leitung 19 dem Fernsehempfänger 21 zugeführt werden.

Die Bedienung des Videorecorders 25 kann über die Tastatur 16 am Videorecorder erfolgen. Die Steuerung erfolgt über die Steuerungseinheit 15 für die Tastatur, von der ein Datenaustausch mit dem Mikroprozessor 11 erfolgt. Die Anzeige der bedienten Tasten und der dadurch erwünschten Resultate erfolgt über die Steuerungseinheit 15, die vom Mikroprozessor 11 bedient wird, mittels einer Anzeigeeinheit 17.

Bei Betätigen des Service-Schalters 22 in Service-Stellung steht der Mikroprozessor 11 in ständigem Datenaustausch mit den im Speicher 10 eingespeicherten Service-Informationen und steuert den Daten/FBAS-Wandler 9 mit Daten, die als FBAS-Signal zur Steuereinheit 5 geleitet werden. Von dort kann dieses Signal zum HF-Modulator 3 und über die Leitung 19 zur Antennenbuchse des Fernsehempfängers 21 gelangen. Das Signal kann auch direkt über die AV-Leitung 18 dem Fernsehempfänger 21 zugeführt werden. Bei diesen Funktionen ist gleichzeitig eine Aufzeichnung der Signale über die Aufzeichnungseinheit 2 und die Antriebseinheit 1 möglich.

Die Erzeugung von Sprachsignalen geschieht folgendermassen: Der Mikroprozessor 11 bedient den Spracherzeuger 12 mit Daten, die als NF-Signal zur Steuereinheit 5 gelangen. Diese können zusätzlich allein und/oder zusammen mit dem FBAS-Signal des Wandlers 9, das von der Steuereinheit 5 entsprechend geschaltet wird, über die AV-Leitung 18 zum Fernsehempfänger 21 übertragen werden. Die Daten können auch über den HF-Modulator 25 und die Leitung 19 der Antennenbuchse des Fernsehempfängers 21 zugeführt werden. Zusätzlich kann das Signal über die Aufzeichnungseinheit 2 und die Antriebseinheit 1 auf dem Videoband aufgezeichnet werden.

Die Steuerungseinheit 8 dient zur Steuerung von Aufnahmen, Wiedergabe, Laufwerksfunktionen sowie Ansteuerung der Abstimmeinheit 6. Die Steuerungseinheit 8 verbindet den Mikroprozessor 11 mit der Wiedergabeeinheit 4, der Aufzeichnungseinheit 2 und der Abstimmeinheit 6. Sie dient zur Entlastung des Mikroprozessors 11. Der Mikroprozessor 11 gibt Bedienungsbefehle an die Steuerungseinheit 8. Von dort werden sie an die angeschlossenen Module weitergeleitet.

Die programmierbare Uhr 7 zum selbsttätigen Einschalten von Funktionen der Antriebseinheit 1 wird von einem eigenen Quarz als Zeitnormal betrieben. Die Uhr 7 erfüllt auch die Aufgabe, in Zusammenwirken mit Antriebseinheit 1, Steuereinheit 5 und Mikroprozessor 11 Laufzeiten des Videorecorders z.B. aufgeteilt auf Laufwerkzeiten, Magnetkopfeingriffszeiten oder Einschaltzeiten zu erfassen und in den Speicher 10 einzugeben.

Hierdurch kann z. B. ein Missbrauch der Garantieansprüche zu Lasten des Herstellers oder des Verkäufers unterbunden werden. Es ergeben sich durch den Betriebsstundenzähler für den Service wertvolle Hinweise auf Verschleiss und Defekte, die durch die Alterung des Recorders auftreten können.

Der Speicher 10 enthält z.B. einen ROM-Speicher, einen RAM-Speicher, sowie einen nicht flüchtigen Speicher EAROM. Im EAROM sind vom Herstellerwerk die Chassis-Nummer und die Service-Anleitung gespeichert.

In der Service-Stellung des Service-Schalters 22 können die einzelnen Speicherzellen z.B. mit Hilfe einer Fortschalttaste 23 angewählt werden.

So ist es möglich, Messpunkte, Messwerte und erforderliche Einstellvorschriften sowie Chassis-nummer und Laufzeiten nacheinander abzufragen.

## Patentansprüche

1. Videorecorder mit Signalgeneratoren für Steuersignale, die bei einem angeschlossenen Fernseh-Wiedergabegerät Anzeigen bewirken, mit der Kombination folgender Merkmale:
A) Es ist ein Speicher (10) mit einem nichtflüchtigen Teil, in dem Daten für Service-Informationen gespeichert sind, vorgesehen,
B) es ist eine Tastatur (16) vorgesehen, durch die eine Service-Stellung einschaltbar ist,
C) es ist ein Mikroprozessor (11) vorgesehen, durch den die in dem Speicher (10) gespeicherten Daten bei Service-Stellung abrufbar sind,
D) es ist ein Daten-FBAS-Wandler (9) und/oder ein Spracherzeuger (12) vorgesehen, durch den die vom Mikroprozessor (11) abgerufenen Daten in Steuersignale umgewandelt werden,
E) es ist für Fehlersuche und Justierarbeiten ein Leitprogramm im Speicher (10) gespeichert,
F) die Chassisnummer des Recorders ist im Speicher (10) gespeichert, und
G) es ist ein Betriebsstundenzähler eingebaut, in der Form, daß ein Mikroprozessor (11) mit Hilfe einer Uhr (7) Betriebszeiten zählt, mit bereits vorhandenen Zeiten addiert und im Speicher (10) speichert.

## Claims

1. A video recorder with signal generators for control signals which, with a television playback device in circuit, produce displays, with the combination of the following features:
A A memory (10) is provided with a non-volatile part in which data for servicing information are stored,
B A keyboard (16) is provided through which a servicing state can be established,
C A microprocessor (11) is provided through which the data stored in the memory (10) can be called up in the servicing state and
D A data/composite colour signal/converter (9) and/or a speech synthesizer (12) is provided through which the data called-up by the microprocessor (11) are converted into control signals,
E For fault searching and adjustment work, a master program is stored in the memory (10),
F The chassis number or the recorder is stored in the memory (10),
G A running time meter is incorporated in the form that a microprocessor (11) with the help of a clock (7) counts operating times, adds them to the already-present times and stores them in the memory (10).

## Revendications

1. Enregistreur vidéo comportant des générateurs de signaux servant à délivrer des signaux de commande, qui déclenchent des affichages dans un appareil de reproduction de télévision, raccordé, comprenant la combinaison des caractéristiques suivants:
A il est prévu une mémoire (10) possédant une partie non volatile, dans laquelle des données concernant des informations de dépannage/réglage sont mémorisées,
B il est prévu un clavier (16), à l'aide duquel une position de dépannage/réglage peut être introduite, C il est prévu un microprocesseur (11), à l'aide duquel les données mémorisées dans la mémoire (10) peuvent être interrogées, dans la position de dépannage/réglage, et
D il est prévu un convertisseur données/signal complet d'image (9) et/ou un générateur de signaux vocaux (12), à l'aide desquels les données appelées par le microprocesseur (11) sont converties en signaux de commande,
E un programme directeur est mémorisé dans la mémoire (10) pour des recherches d'erreurs et des travaux d'ajustement,
F le numéro de châssis de l'enregistreur est mémorisé dans la mémoire (10), et
G un compteur d'heures de fonctionnement est intégré, sous une forme telle qu'un microprocesseur (11) compte, à l'aide d'une minuterie (7), les durées de fonctionnement, les ajoute à des durées déjà présentes et les mémorise dans la mémoire (10).
